# EUROPEAN PATENT APPLICATION

(11) **EP 4 692 098 A1**
(43) Date of publication of application: **11.02.2026**
(21) Application number: 24784636.3
(22) Date of filing: 27.02.2024
(51) Int. Cl.: C07F 7/21, C08G 77/50, C08L 83/06, C08L 83/14

(54) **ORGANOSILICON COMPOUND AND METHOD FOR PRODUCING SAME, AND ADDITIVE**

(30) Priority: 03.04.2023 JP 2023060105
(71) Applicant: SHIN-ETSU CHEMICAL CO., LTD., Tokyo 1000005 (JP)
(72) Inventor: KATAYAMA, Taiki, Annaka-shi, Gunma 379-0224 (JP)
(74) Representative: Mewburn Ellis LLP
(86) International application number: PCT/JP2024/006913
(87) International publication number: WO 2024/209837

(57) **Abstract**

Provided is a novel organosilicon compound represented by formula (1). In cases where the organosilicon compound is added to a condensation-curable and room-temperature-curable resin composition, the tensile strength and adhesive strength of a cured product of the composition can be improved. Therefore, the organosilicon compound is useful as an additive for increasing the strength of a cured product of the condensation-curable and room-temperature-curable resin composition. 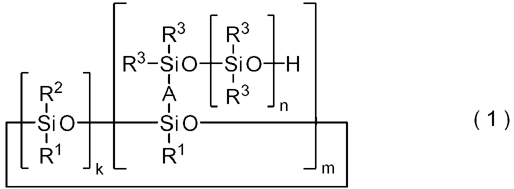 (In the formula, R¹ represents an unsubstituted or substituted monovalent C1-12 hydrocarbon group excluding an aliphatic unsaturated bond; R² represents a hydrogen atom or an aliphatic unsaturated monovalent C2-12 hydrocarbon group; R³ represents an unsubstitued or substituted monovalent C1-12 hydrocarbon group excluding an aliphatic unsaturated bond; A represents a divalent C2-8 hydrocarbon group; k represents an integer of 0 to 2; m represents an integer of 3 to 6; k+m represents an integer of 3 to 8; and n represents an integer of 0 to 100.)

## Description

### TECHNICAL FIELD

This invention relates to a novel organosilicon compound, especially an organosilicon compound which is advantageously used as an additive capable of contributing to the enhancement of the strength of a cured product of a room temperature-curable resin composition of condensation cure type, a method for preparing the organosilicon compound, and an additive to room temperature-curable resin compositions of condensation cure type.

### BACKGROUND ART

Of prior art well-known room temperature-curable resin compositions of condensation cure type which undergo condensation reaction with airborne water or moisture at room temperature (RT, 23°C±15°C), crosslink and cure into elastomers or cured rubber products, RT-curable organopolysiloxane compositions of condensation cure type are typical. The RT-curable organopolysiloxane compositions are widely used in building, transportation and electric/electronic part fields because of their safety, durability as rubber and adhesion. In particular, the tensile strength or bond strength of cured products is often regarded significant because such strength is closely related to the reliability of members in which the cured products are used.

Among RT-curable organopolysiloxane compositions, the RT-curable organopolysiloxane compositions of one-component (or part) type are widely used as elastic adhesives and coating agents in the electric/electronic industry and sealing agents in the building industry. This is because the inconvenient steps of metering and mixing a base polymer, crosslinker, catalyst and the like immediately before use are eliminated, any errors in blending are avoided, and satisfactory adhesion to a wide variety of substrates is available even when no primers are used.

Such RT-curable organopolysiloxane compositions of one-component type are often classified in terms of the compound which is released from the compositions upon contact with airborne water. Typical are organopolysiloxane compositions of deacetic acid, deoximation, deamidation, dehydroxylamination, deacetonation, and dealcoholization types. Of these, the organopolysiloxane composition of deoximation type which cures with the release of oxime has advantages including storage stability, and formation of a cured film within a short time. The organopolysiloxane composition of dealcoholization type which cures with the release of alcohol has advantages including least odor, no corrosion of metals such as copper and iron, good self-adhesion (adhesion after curing to various substrates when no primers are used), and adhesion durability. They are used in the field where their advantages are useful.

With respect to the RT-curable organopolysiloxane compositions of one-component type, however, it is generally known that their cured products have a low tensile strength or bond strength.

As the means for enhancing the tensile strength or adhesion strength of a cured product of the RT-curable organopolysiloxane composition of one-component type, the method of adding a filler such as silica or colloidal calcium carbonate to the composition (Non-Patent Document 1) is known from the past.

The filler, however, has some problems that if the addition amount is increased too much, the composition experiences an extreme viscosity buildup and becomes less workable on use. There is the demand for further improvements.

### PRIOR ART DOCUMENTS

### NON-PATENT DOCUMENT

Non-Patent Document 1: K. Ito, "Silicone Handbook," Nikkan Kogyo Shimbun Ltd., 1990

### SUMMARY OF INVENTION

### TECHNICAL PROBLEM

An object of the invention, which has been made under the above-mentioned circumstances, is to provide a novel organosilicon compound and a method for preparing the same, the organosilicon compound, when added to a RT-curable resin composition of condensation cure type, typically RT-curable organopolysiloxane composition of condensation cure type (so-called silicone RTV rubber composition), being useful as an additive for enhancing the strength of a cured product of the composition; and an additive for RT-curable resin compositions of condensation cure type.

### SOLUTION TO PROBLEM

Making extensive investigations to attain the above object, the inventor has found that when a novel organosilicon compound having formula (1) shown below is added to a RT-curable resin composition of condensation cure type, typically RT-curable organopolysiloxane composition of condensation cure type, the tensile strength or bond strength of a cured product of the composition is enhanced; and that the novel organosilicon compound is useful as an additive for enhancing the strength of a cured product of the RT-curable resin composition of condensation cure type. The invention is predicated on this finding.

The invention provides an organosilicon compound, a method for preparing the same, and an additive, as defined below.
[1] An organosilicon compound having the formula (1): 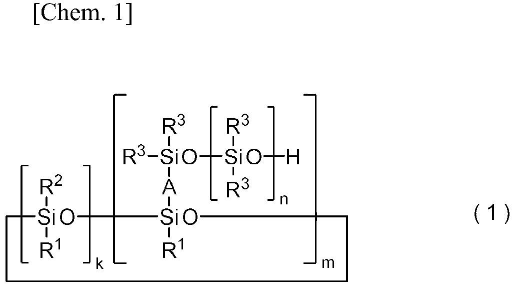 wherein R¹ is a C1-C12 unsubstituted or substituted, monovalent hydrocarbon group exclusive of an aliphatic unsaturated bond, R² is hydrogen or a C2-C12 aliphatic unsaturated monovalent hydrocarbon group, R³ is a C1-C12 unsubstituted or substituted, monovalent hydrocarbon group exclusive of an aliphatic unsaturated bond, A is a C2-C8 divalent hydrocarbon group, k is an integer of 0 to 2, m is an integer of 3 to 6, k+m is an integer of 3 to 8, and n is an integer of 0 to 100.
[2] The organosilicon compound of [1] which is an additive to be added to a room temperature-curable resin composition of condensation cure type for enhancing the strength of a cured product thereof.
[3] A method for preparing the organosilicon compound of [1] or [2], comprising the step of subjecting an organohydrogensilane or organohydrogenpolysiloxane having the formula (2): 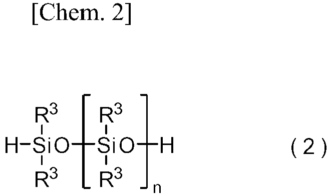 wherein R³ is a C1-C12 unsubstituted or substituted, monovalent hydrocarbon group exclusive of an aliphatic unsaturated bond, and n is an integer of 0 to 100, and a cyclic organopolysiloxane having the formula (3): 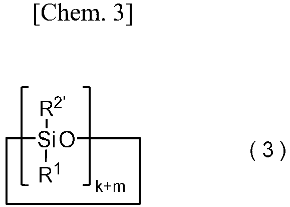 wherein R¹ is a C1-C12 unsubstituted or substituted, monovalent hydrocarbon group exclusive of an aliphatic unsaturated bond, R²' is a C2-C12 aliphatic unsaturated monovalent hydrocarbon group, k is an integer of 0 to 2, m is an integer of 3 to 6, and k+m is an integer of 3 to 8, to hydrosilation addition reaction in the presence of a platinum compound-containing catalyst.
[4] A method for preparing the organosilicon compound of [1] or [2], comprising the step of subjecting an organosilane or organopolysiloxane having the formula (4): 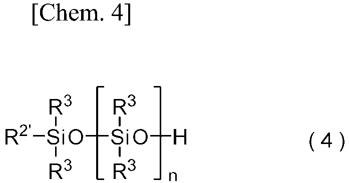 wherein R²' is a C2-C12 aliphatic unsaturated monovalent hydrocarbon group, R³ is a C1-C12 unsubstituted or substituted, monovalent hydrocarbon group exclusive of an aliphatic unsaturated bond, and n is an integer of 0 to 100, and a cyclic organohydrogenpolysiloxane having the formula (5): 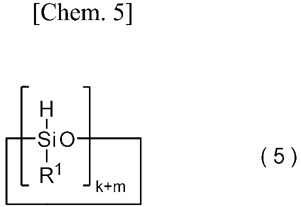 wherein R¹ is a C1-C12 unsubstituted or substituted, monovalent hydrocarbon group exclusive of an aliphatic unsaturated bond, k is an integer of 0 to 2, m is an integer of 3 to 6, and k+m is an integer of 3 to 8, to hydrosilation addition reaction in the presence of a platinum compound-containing catalyst.
[5] An additive to be added to a room temperature-curable resin composition of condensation cure type, the additive comprising the organosilicon compound of [1] or [2].
[6] The additive of [5] wherein the room temperature-curable resin composition of condensation cure type is a room temperature-curable organopolysiloxane composition of condensation cure type.

In conjunction with the organosilicon compound of the invention defined herein, an aggregate of organosilicon compounds, which are more or less different in structure, falls within the scope of the invention, as long as the average structure of the aggregate of organosilicon compounds falls within the above-defined range.

### ADVANTAGEOUS EFFECTS OF INVENTION

The organosilicon compound of the invention is novel and useful as an additive for enhancing the strength of a cured product of a RT-curable resin composition of condensation cure type, typically RT-curable organopolysiloxane composition of condensation cure type (so-called silicone RTV rubber composition).

### DESCRIPTION OF EMBODIMENTS

Now the invention is described in detail.

### <Organosilicon compound>

The invention provides an organosilicon compound, specifically cyclic organopolysiloxane compound having the formula (1): 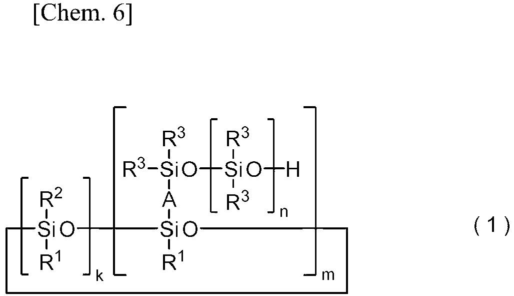 wherein R¹ is a C1-C12 unsubstituted or substituted, monovalent hydrocarbon group exclusive of an aliphatic unsaturated bond, R² is hydrogen or a C2-C12 aliphatic unsaturated monovalent hydrocarbon group, R³ is a C1-C12 unsubstituted or substituted, monovalent hydrocarbon group exclusive of an aliphatic unsaturated bond, A is a C2-C8 divalent hydrocarbon group, k is an integer of 0 to 2, m is an integer of 3 to 6, k+m is an integer of 3 to 8, and n is an integer of 0 to 100. It is a silanol-containing polyfunctional cyclic organopolysiloxane compound which as the monovalent substituent (side chain) bonded to a silicon atom in the cyclic organopolysiloxane composed of 3 to 8 (= k+m) siloxane units, has 3 to 6 (= m) diorganohydroxysilyl groups or monovalent organosiloxanyl groups terminated with a silanol group (silicon-bonded hydroxy group) via a divalent hydrocarbon group (A).

In formula (1), examples of the C1-C12 unsubstituted or substituted, monovalent hydrocarbon group exclusive of an aliphatic unsaturated bond, represented by R¹, include alkyl groups such as methyl, ethyl, propyl, isopropyl, butyl, isobutyl, tert-butyl, pentyl, hexyl, heptyl, octyl, 2-ethylhexyl, nonyl, decyl and dodecyl; cycloalkyl groups such as cyclopentyl and cyclohexyl; aryl groups such as phenyl, tolyl, xylyl, α- and β-naphthyl; aralkyl groups such as benzyl, 2-phenylethyl and 3-phenylpropyl; and substituted forms of the foregoing groups in which some or all of the hydrogen atoms are substituted by halogen such as F, Cl or Br, or cyano, e.g., 3-chloropropyl, 3,3,3-trifluoropropyl and 2-cyanoethyl. Of these, R¹ is preferably selected from lower alkyl groups such as methyl, ethyl, isopropyl and butyl and aryl groups such as phenyl, more preferably methyl and phenyl.

In formula (1), R² is hydrogen or a C2-C12 aliphatic unsaturated monovalent hydrocarbon group. Examples of the C2-C12 aliphatic unsaturated monovalent hydrocarbon group include alkenyl groups such as vinyl, allyl, propenyl, isopropenyl, butenyl, isobutenyl, pentenyl, hexenyl, and cyclohexenyl; and alkynyl groups such as ethynyl (or acetylenyl) and ethynylmethyl. Inter alia, R² is preferably selected from hydrogen and alkenyl groups such as vinyl and allyl, more preferably hydrogen and vinyl.

In formula (1), examples of the C1-C12 unsubstituted or substituted, monovalent hydrocarbon group free of an aliphatic unsaturated bond, represented by R³, include those exemplified above for R¹, specifically alkyl groups such as methyl, ethyl, propyl, isopropyl, butyl, isobutyl, tert-butyl, pentyl, hexyl, heptyl, octyl, 2-ethylhexyl, nonyl, decyl and dodecyl; cycloalkyl groups such as cyclopentyl and cyclohexyl; aryl groups such as phenyl, tolyl, xylyl, α- and β-naphthyl; aralkyl groups such as benzyl, 2-phenylethyl and 3-phenylpropyl; and substituted forms of the foregoing groups in which some or all of the hydrogen atoms are substituted by halogen such as F, Cl or Br, or cyano, e.g., 3-chloropropyl, 3,3,3-trifluoropropyl and 2-cyanoethyl. Of these, R³ is preferably selected from lower alkyl groups such as methyl, ethyl, isopropyl and butyl and aryl groups such as phenyl, more preferably methyl and phenyl.

In formula (1), A is a C2-C8, preferably C2-C4 divalent hydrocarbon group, such as alkylene or alkenylene group. The preferred divalent hydrocarbon group is an alkylene group: -(CH₂)ₚ- wherein p is an integer of 2 to 8, preferably 2 to 4. Inter alia, -CH₂CH₂- and -CH₂CH₂CH₂- are preferred.

In formula (1), k is an integer of 0 to 2, preferably 0 or 1.

In formula (1), m is an integer of 3 to 6, preferably 4 or 5.

In formula (1), k+m is an integer of 3 to 8, preferably 4 to 6.

In formula (1), n is an integer of 0 to 100, preferably 0 to 20, more preferably 0 to 10, even more preferably 0 to 4.

### <Method for preparing organosilicon compound>

The organosilicon compound having formula (1) can be prepared by a method comprising the step [I] or [II]:
[I] subjecting an organohydrogensilane or organohydrogenpolysiloxane having the formula (2): 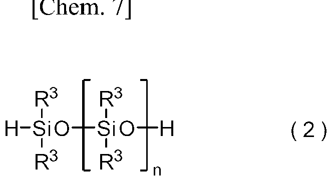 wherein R³ and n are as defined above, and a cyclic organopolysiloxane having the formula (3): 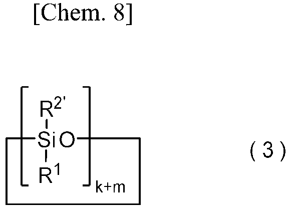 wherein R¹, k, m and k+m are as defined above, R²' is a C2-C12 aliphatic unsaturated monovalent hydrocarbon group, to hydrosilation addition reaction in the presence of a platinum compound-containing catalyst; or
[II] subjecting an organosilane or organopolysiloxane having the formula (4): 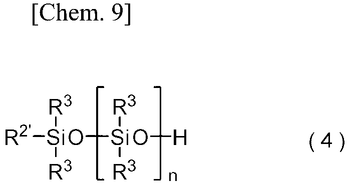 wherein R³ and n are as defined above, R²' is a C2-C12 aliphatic unsaturated monovalent hydrocarbon group, and a cyclic organohydrogenpolysiloxane having the formula (5): 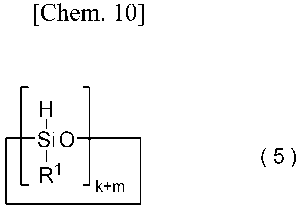 wherein R¹, k, m, and k+m are as defined above, to hydrosilation addition reaction in the presence of a platinum compound-containing catalyst.

Specifically, an organohydrogensilane of formula (2) having a silanol group (silicon-bonded hydroxy group) and a silicon-bonded hydrogen atom (i.e., hydrosilyl group: SiH) in the molecule, i.e., corresponding to formula (2) wherein n=0, or an organohydrogenpolysiloxane of formula (2) having a silanol group at one end of the molecular chain and a silicon-bonded hydrogen atom at the other end of the molecular chain, i.e., corresponding to formula (2) wherein n=1 to 100, and a cyclic organopolysiloxane of formula (3) having an aliphatic unsaturated monovalent hydrocarbon group (R²') such as alkenyl or alkynyl are subjected to hydrosilation addition reaction in the presence of a platinum compound-containing catalyst; alternatively, an organosilane of formula (4) having a silanol group and an aliphatic unsaturated monovalent hydrocarbon group (R²') such as alkenyl or alkynyl in the molecule, i.e., corresponding to formula (4) wherein n=0, or an organopolysiloxane of formula (4) having an aliphatic unsaturated monovalent hydrocarbon group (R²') such as alkenyl or alkynyl at one end of the molecular chain and a silanol group at the other end of the molecular chain, i.e., corresponding to formula (4) wherein n=1 to 100, and a cyclic organohydrogenpolysiloxane of formula (5) having a silicon-bonded hydrogen atom are subjected to hydrosilation addition reaction in the presence of a platinum compound-containing catalyst, whereby the silicon-bonded hydrogen atom (SiH group) is added to the aliphatic unsaturated monovalent hydrocarbon group (R²') such as alkenyl or alkynyl to form a carbon-silicon bond, that is, via the addition reaction of the silicon-bonded hydrogen atom (SiH group) in formula (2) to the aliphatic unsaturated monovalent hydrocarbon group (R²') such as alkenyl or alkynyl in formula (3), or via the addition reaction of the silicon-bonded hydrogen atom (SiH group) in formula (5) to the aliphatic unsaturated monovalent hydrocarbon group (R²') such as alkenyl or alkynyl in formula (4), a divalent hydrocarbyl group such as alkylene and/or alkenylene as represented by A in formula (1) is formed. In this way, the organosilicon compound of formula (1) is prepared.

In formulae (3) and (4), examples of the C2-C12 aliphatic unsaturated monovalent hydrocarbon group represented by R²' include the same as exemplified above as the C2-C12 aliphatic unsaturated monovalent hydrocarbon group among the groups represented by R² in formula (1). R²' is preferably an alkenyl group such as vinyl or allyl, most preferably vinyl.

Examples of the organohydrogensilane or organohydrogenpolysiloxane having formula (2) are shown below.

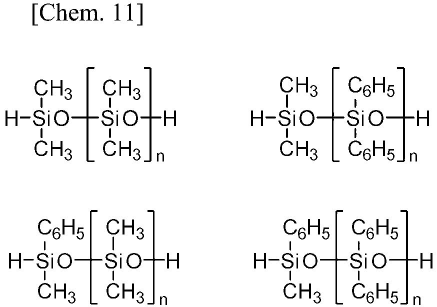

Herein n is as defined above.

Examples of the cyclic organopolysiloxane having formula (3) are shown below.

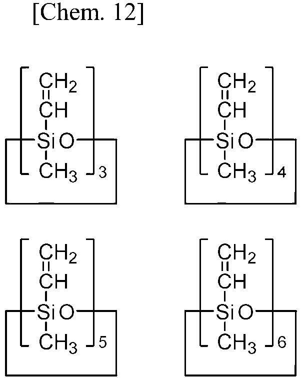

Examples of the organosilane or organopolysiloxane having formula (4) are shown below.

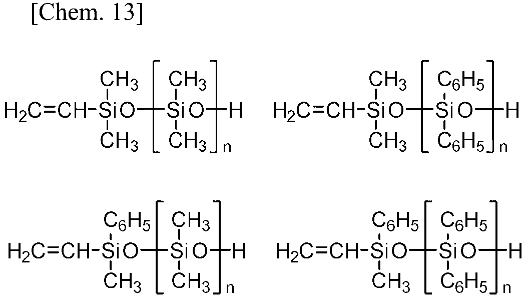

Herein n is as defined above.

Examples of the cyclic organohydrogenpolysiloxane having formula (5) are shown below.

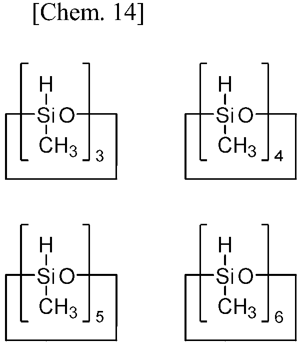

In the reaction of the organohydrogensilane or organohydrogenpolysiloxane having formula (2) with the cyclic organopolysiloxane having formula (3), the reactant ratio is preferably set so as to give 0.5 to 1.5 mol, more preferably 0.7 to 1.4 mol of aliphatic unsaturated monovalent hydrocarbon group (such as alkenyl or alkynyl) in the cyclic organopolysiloxane having formula (3) per mole of hydrosilyl (SiH) group in the organohydrogensilane or organohydrogenpolysiloxane having formula (2), when it is considered to restrain formation of by-products during hydrosilation addition reaction and to enhance the shelf stability and other properties of the resulting organosilicon compound.

In the reaction of the organosilane or organopolysiloxane having formula (4) with the cyclic organohydrogenpolysiloxane having formula (5), the reactant ratio is preferably set so as to give 0.5 to 1.5 mol, more preferably 0.7 to 1.4 mol of aliphatic unsaturated monovalent hydrocarbon group (such as alkenyl or alkynyl) in the organosilane or organopolysiloxane having formula (4) per mole of hydrosilyl (SiH) group in the cyclic organohydrogenpolysiloxane having formula (5), when it is considered to restrain formation of by-products during hydrosilation addition reaction and to enhance the shelf stability and other properties of the resulting organosilicon compound.

The platinum compound-containing catalyst used in the hydrosilation addition reaction is not particularly limited. Examples include chloroplatinic acid, alcohol solutions of chloroplatinic acid, toluene or xylene solutions of platinum/1,3-divinyl-1,1,3,3-tetramethyldisiloxane complex, tetrakistriphenylphosphine platinum, dichlorobistriphenylphosphine platinum, dichlorobisacetonitrile platinum, dichlorobisbenzonitrile platinum, dichlorocyclooctadiene platinum, and supported catalysts such as platinum on carbon, platinum on alumina, and platinum on silica. Of these, toluene or xylene solutions of platinum/1,3-divinyl-1,1,3,3-tetramethyldisiloxane complex are preferred from the aspect of positional selectivity of hydrosilation addition reaction.

Although the amount of the platinum compound-containing catalyst used is not particularly limited, it is preferred in view of reactivity and productivity to set the amount so as to give 1×10⁻⁷ to 1×10⁻² mol, more preferably 1×10⁻⁷ to 1×10⁻³ mol of platinum atom per mol of the organosilane or organopolysiloxane compound having aliphatic unsaturated monovalent hydrocarbon group (such as alkenyl or alkynyl), as represented by formula (3) or (4).

Also, a co-catalyst may be used to enhance the reactivity of hydrosilation addition reaction. Although the co-catalyst used herein may be selected from co-catalysts commonly used in hydrosilation addition reaction, ammonium salts of mineral acids, acid amide compounds and carboxylic acids are preferred.

Examples of the ammonium salt of mineral acid include ammonium chloride, ammonium sulfate, ammonium amidosulfate, ammonium nitrate, ammonium dihydrogen phosphate, diammonium hydrogen phosphate, triammonium phosphate, ammonium diphosphite, ammonium carbonate, ammonium hydrogen carbonate, ammonium sulfide, ammonium borate, and ammonium borofluoride. Inter alia, ammonium carbonate and ammonium hydrogen carbonate are preferred.

Examples of the acid amide compound include formamide, acetamide, N-methylacetamide, N,N-dimethylacetamide, propionamide, acrylamide, malonamide, succinamide, maleamide, fumaramide, benzamide, phthalamide, palmitic acid amide, and stearic acid amide. Inter alia, formamide and stearic acid amide are preferred, with formamide being more preferred.

Examples of the carboxylic acid include formic acid, acetic acid, propionic acid, butyric acid, methoxyacetic acid, pentanoic acid, caproic acid, heptanoic acid, octanoic acid, lactic acid, glycolic acid, trifluoroacetic acid, maleic acid, fumaric acid, succinic acid, tartaric acid, and oxalic acid. Inter alia, formic acid, acetic acid, lactic acid, maleic acid, fumaric acid, succinic acid and trifluoroacetic acid are preferred, with acetic acid and trifluoroacetic acid being more preferred.

Although the amount of the co-catalyst used is not particularly limited, it is preferred from the aspects of reactivity and positional selectivity of hydrosilation addition reaction and economy to use 1×10⁻⁵ to 1×10⁻¹ mol, preferably 1×10⁻⁴ to 5×10⁻¹ mol of the co-catalyst per mol of the organosilane or organopolysiloxane compound having aliphatic unsaturated monovalent hydrocarbon group (such as alkenyl or alkynyl), as represented by formula (3) or (4).

Although the hydrosilation addition reaction runs in a solventless system, a solvent may be used. Examples of the solvent used herein include hydrocarbon solvents such as pentane, hexane, cyclohexane, heptane, isooctane, benzene, toluene, and xylene; ether solvents such as diethyl ether, tetrahydrofuran and dioxane; ester solvents such as ethyl acetate and butyl acetate; aprotic polar solvents such as N,N-dimethylformamide; chlorinated hydrocarbon solvents such as dichloromethane and chloroform. These solvents may be used alone or in admixture of two or more.

Although the amount of the solvent used is not particularly limited, it is preferred from the aspect of productivity or production efficiency to use 0 to 1,000 parts by weight, more preferably 0 to 300 parts by weight of the solvent per 100 parts by weight of the total of the organosilane or organopolysiloxane compound having aliphatic unsaturated monovalent hydrocarbon group (such as alkenyl or alkynyl), as represented by formula (3) or (4), and the organosilane or organopolysiloxane compound having silicon-bonded hydrogen atoms, as represented by formula (2) or (5).

In the hydrosilation addition reaction, the reaction temperature, though not particularly limited, is from RT (23°C±15°C) to elevated temperature, preferably from RT (23°C±15°C) to 200°C. It is more preferable to carry out the reaction at elevated temperature in order to acquire an appropriate reaction rate. When reaction is carried out at elevated temperature, the temperature is preferably 40 to 110°C, more preferably 40 to 90°C. The reaction time, though not particularly limited, is preferably from 1 to 60 hours, more preferably 1 to 30 hours, even more preferably 1 to 20 hours.

In this way, the compound having formula (1) is obtained. Examples of the compound include those shown by the following formulae, but are not limited thereto.

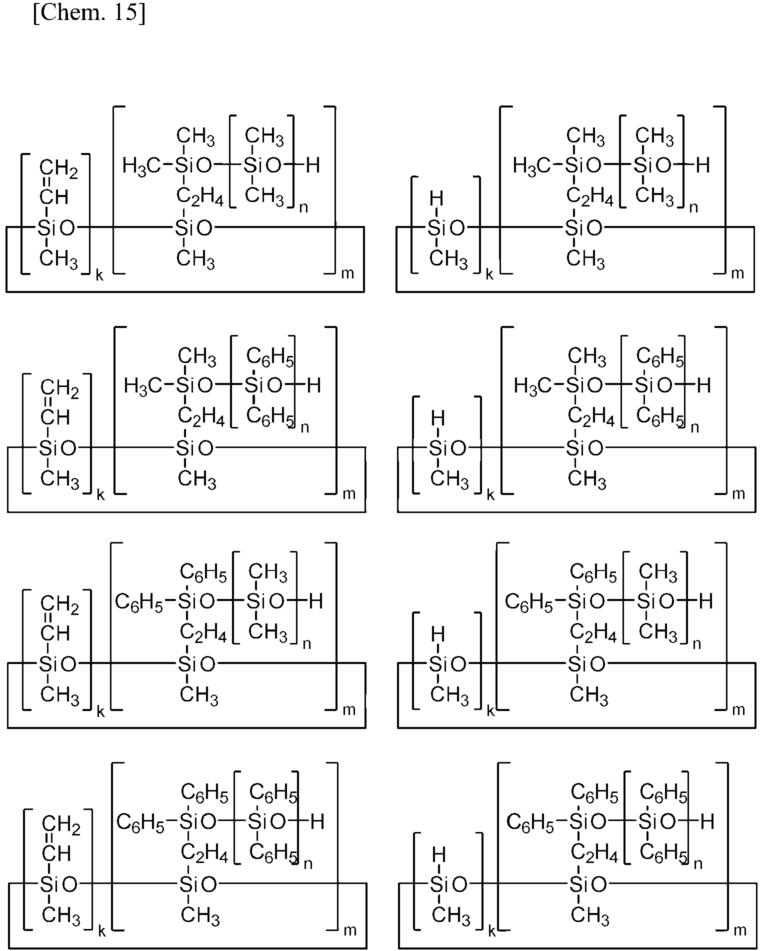

Herein k is an integer of 0 to 2, m is an integer of 3 to 6, k+m is an integer of 3 to 8, and n is an integer of 0 to 100.

Other examples of the compound having formula (1) include the following compounds, but are not limited thereto.

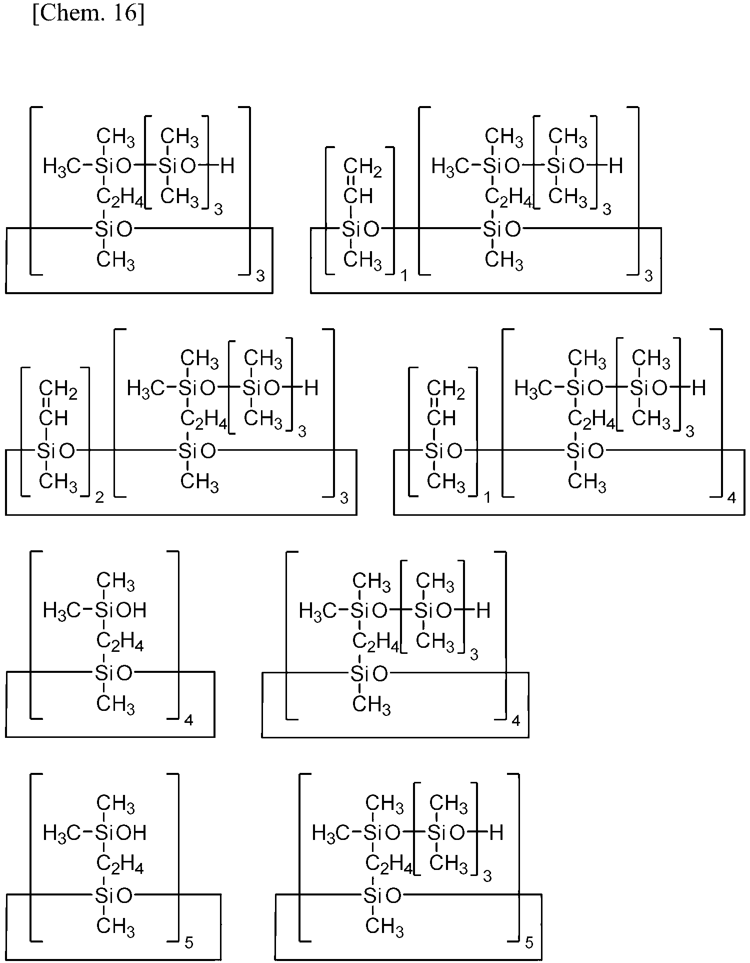

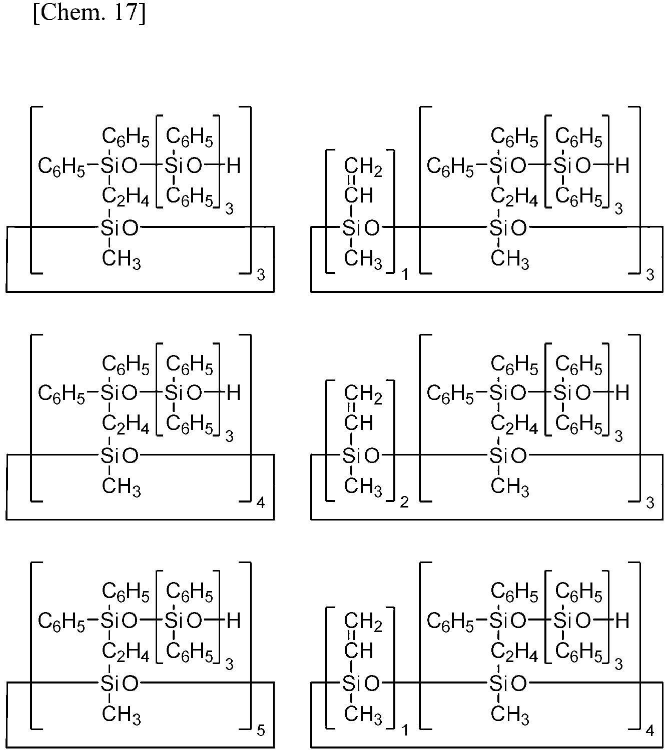

### <Additive>

The invention also provides an additive to be added to a RT-curable resin composition of condensation cure type, the additive comprising the organosilicon compound defined herein.

The organosilicon compound of the invention is advantageously used as an additive (strengthening agent) for enhancing the strength of a cured product of a RT-curable resin composition of condensation cure type, typically RT-curable organopolysiloxane composition of condensation cure type (for example, RT-curable silicone rubber composition of condensation cure type comprising a linear organopolysiloxane blocked at both ends with a silanol group or hydrolyzable silyl group as a base polymer, a hydrolyzable organosilane compound as a crosslinker, a condensation curing catalyst, and a reinforcing filler).

When the organosilicon compound is used as a strengthening agent in a RT-curable resin composition of condensation cure type, its amount is preferably 0.01 to 50 parts by weight, more preferably 0.1 to 10 parts by weight per 100 parts by weight of the RT-curable resin composition of condensation cure type.

The strength of the cured product of a RT-curable resin composition of condensation cure type in which the organosilicon compound is blended as an additive refers to hardness, tensile strength and/or tensile shear bond strength and can be measured according to JIS K-6249.

### EXAMPLES

Examples and Reference Examples are given below for further illustrating the invention although the invention is not limited to the Examples. The molecular weight is a number average molecular weight measured by GPC versus polystyrene standards using toluene as the developing solvent.

### Synthesis of organosilicon compound

### [Example 1]

### Synthesis (1) of organosilicon compound #1

A 500-ml separable flask equipped with a stirrer, reflux condenser, dropping funnel and thermometer was charged with 34.4 g (0.1 mol, alkenyl amount 0.4 mol) of 1,3,5,7-tetramethyl-1,3,5,7-tetravinylcyclotetrasiloxane, 0.15 g of a toluene solution of platinum/1,3-divinyl-1,1,3,3-tetramethyldisoloxane complex (Pt amount 6.8×10⁻⁶ mol), and 50 g of toluene and heated at 80°C. To the flask, 119.5 g (SiH group amount 0.4 mol) of organopolysiloxane having a silicon-bonded hydrogen (SiH group) at one end of the molecular chain and a silanol group (silicon-bonded hydroxy group) at the other end was added dropwise. The solution was heated and stirred at 80°C for 3 hours. When it was confirmed by gas chromatography that the peaks assigned to one reactant, organopolysiloxane having a silicon-bonded hydrogen at one end of the molecular chain completely disappeared, the reaction was judged completed. At the end of reaction, vacuum distillation at 120°C and 5 mmHg was conducted for 2 hours. By filtration, there was obtained 151.4 g of organosilicon compound #1 having Mn of 1,571, represented by the formula (7).

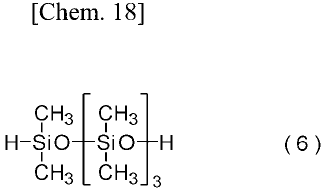

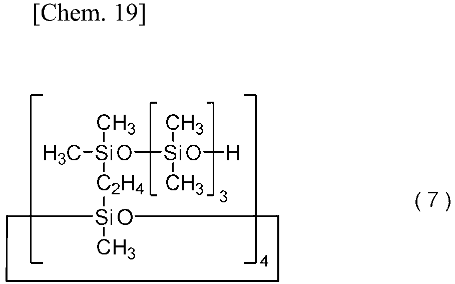

### [Example 2]

### Synthesis (2) of organosilicon compound #1

A 500-ml separable flask equipped with a stirrer, reflux condenser, dropping funnel and thermometer was charged with 129.9 g (0.4 mol, alkenyl amount 0.4 mol) of organopolysiloxane having a vinyl group at one end of the molecular chain and a silanol group (silicon-bonded hydroxy group) at the other end, represented by the formula (8), 0.15 g of a toluene solution of platinum/1,3-divinyl-1,1,3,3-tetramethyldisoloxane complex (Pt amount 6.8×10⁻⁶ mol), and 50 g of toluene and heated at 80°C. To the flask, 24.1 g (SiH amount 0.4 mol) of 1,3,5,7-tetramethyl-1,3,5,7-tetrahydrogencyclotetrasiloxane was added dropwise. The solution was heated and stirred at 80°C for 3 hours. When it was confirmed by gas chromatography that the peaks assigned to one reactant, organopolysiloxane having an alkenyl group completely disappeared, the reaction was judged completed. At the end of reaction, vacuum distillation at 120°C and 5 mmHg was conducted for 2 hours. By filtration, there was obtained 153.0 g of organosilicon compound #1 having Mn of 1,571, represented by the formula (7).

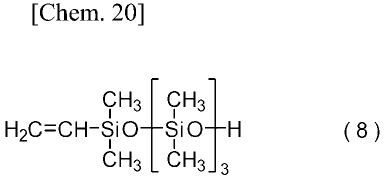

### [Example 3]

### Synthesis of organosilicon compound #2

A 500-ml separable flask equipped with a stirrer, reflux condenser, dropping funnel and thermometer was charged with 40.9 g (0.1 mol, alkenyl amount 0.4 mol) of vinyl(dimethyl)hydroxysilane represented by the formula (9), 0.15 g (Pt amount: 6.8×10⁻⁶ mol) of a toluene solution of platinum/1,3-divinyl-1,1,3,3-tetramethyldisoloxane complex, and 50 g of toluene and heated at 80°C. To the flask, 24.1 g (SiH amount 0.4 mol) of 1,3,5,7-tetramethyl-1,3,5,7-tetrahydrogencyclotetrasiloxane was added dropwise. The solution was heated and stirred at 80°C for 3 hours. When it was confirmed by gas chromatography that the peaks assigned to one reactant, organopolysiloxane having an alkenyl group completely disappeared, the reaction was judged completed. At the end of reaction, vacuum distillation at 120°C and 5 mmHg was conducted for 2 hours. By filtration, there was obtained 64.3 g of organosilicon compound #2 having Mn of 651, represented by the formula (10).

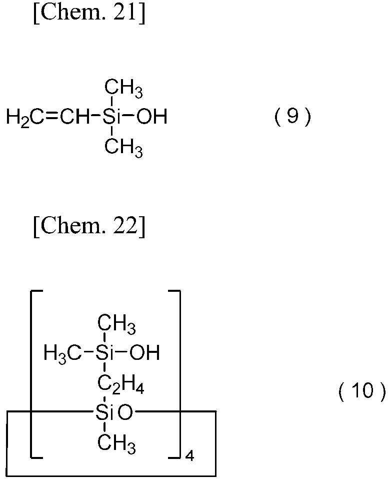

The benefits of the inventive organosilicon compound are described in conjunction with Reference Example. The properties in Reference Example are measured at 23°C. All "parts" are by weight. The viscosity is measured at 23°C by a rotational viscometer.

### [Reference Example 1]

Composition 1 was prepared by adding 70 parts of a linear dimethylpolysiloxane blocked with a silanol group at both ends of the molecular chain and having a viscosity of 20,000 mPa·s, 15 parts of a linear dimethylpolysiloxane blocked with a trimethylsilyl group at both ends of the molecular chain and having a viscosity of 100 mPa·s, 3 parts of organosilicon compound #1, and 10 parts of fumed silica, and mixing them under reduced pressure for 30 minutes. Then, 5 parts of methyltris(methylethylketoxime)silane, 3 parts of vinyltris(methylethylketoxime)silane, 0.05 part of dioctyltin dilaurate, and 1 part of 3-aminopropyltriethoxysilane (KBE-903 by Shin-Etsu Chemical Co., Ltd.) as adhesion promoter were added. The ingredients were mixed under reduced pressure again until uniform.

### [Reference Example 2]

Composition 2 was prepared by the same procedure as in Reference Example 1 aside from adding 6 parts of organosilicon compound #1.

### [Reference Example 3]

Composition 3 was prepared by the same procedure as in Reference Example 1 aside from adding 2 parts of organosilicon compound #2 instead of organosilicon compound #1.

### [Comparative Reference Example 1]

Composition 4 was prepared by the same procedure as in Reference Example 1 aside from omitting organosilicon compound #1.

### (Test)

### [Sheet physical properties]

Each of the RT-curable resin compositions in Reference Examples 1 to 3 and Comparative Reference Example 1, immediately after preparation, was shaped into a sheet of 2 mm thick and exposed to air at 23°C and 50% RH. The sheet was allowed to stand in the same atmosphere for 7 days until a cured product was obtained. The cured product was measured for physical properties (hardness and tensile strength) according to JIS K-6249. It is noted that hardness is measured by Durometer A hardness meter of JIS K-6249. The results are shown in Table 1.

### [Shear bond test]

A shear bond test specimen having a bond area of 2.5 mm² and a bond thickness of 1 mm was obtained by using each of the RT-curable resin compositions of Reference Examples 1 to 3 and Comparative Reference Example 1, immediately after preparation, and aluminum adherends of 25 mm wide and 100 mm long, bonding them, and aging at 23°C and 50% RH for 7 days. The specimen was measured for shear bond strength according to JIS K-6249. The results are shown in Table 1.

**[Table 1]**

| | | | | |
|---|---|---|---|---|
| | Reference Example 1 | Reference Example 2 | Reference Example 3 | Reference Example 4 |
| | Composition 1 | Composition 2 | Composition 3 | Composition 4 |
| Type A hardness | 34 | 35 | 35 | 29 |
| Tensle strength (MPa) | 2.2 | 2.4 | 2.4 | 1.6 |
| Shear bond strength (MPA) | 1.8 | 2.0 | 2.0 | 1.3 |

It is evident from the results in Table 1 that the cured products of the RT-curable organopolysiloxane compositions (Compositions 1 to 3) containing organosilicon compounds #1 and #2, prepared in Reference Examples 1 to 3, have high tensile strength and shear bond strength as compared with the RT-curable organopolysiloxane composition (Composition 4) free of the inventive organosilicon compound, prepared in Comparative Reference Example 1.

## Claims

1. An organosilicon compound having the formula (1): 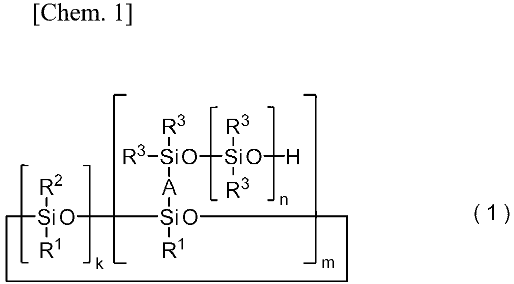 wherein R¹ is a C1-C12 unsubstituted or substituted, monovalent hydrocarbon group exclusive of an aliphatic unsaturated bond, R² is hydrogen or a C2-C12 aliphatic unsaturated monovalent hydrocarbon group, R³ is a C1-C12 unsubstituted or substituted, monovalent hydrocarbon group exclusive of an aliphatic unsaturated bond, A is a C2-C8 divalent hydrocarbon group, k is an integer of 0 to 2, m is an integer of 3 to 6, k+m is an integer of 3 to 8, and n is an integer of 0 to 100.

2. The organosilicon compound of claim 1 which is an additive to be added to a room temperature-curable resin composition of condensation cure type for enhancing the strength of a cured product thereof.

3. A method for preparing the organosilicon compound of claim 1 or 2, comprising the step of subjecting an organohydrogensilane or organohydrogenpolysiloxane having the formula (2): 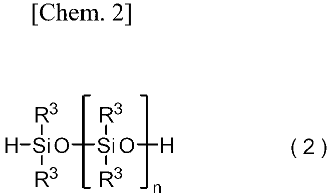 wherein R³ is a C1-C12 unsubstituted or substituted, monovalent hydrocarbon group exclusive of an aliphatic unsaturated bond, and n is an integer of 0 to 100, and a cyclic organopolysiloxane having the formula (3): 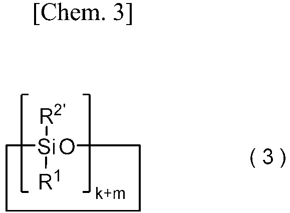 wherein R¹ is a C1-C12 unsubstituted or substituted, monovalent hydrocarbon group exclusive of an aliphatic unsaturated bond, R²' is a C2-C12 aliphatic unsaturated monovalent hydrocarbon group, k is an integer of 0 to 2, m is an integer of 3 to 6, and k+m is an integer of 3 to 8, to hydrosilation addition reaction in the presence of a platinum compound-containing catalyst.

4. A method for preparing the organosilicon compound of claim 1 or 2, comprising the step of subjecting an organosilane or organopolysiloxane having the formula (4): 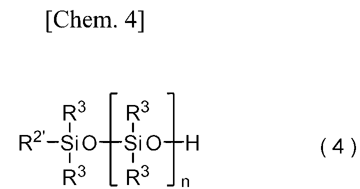 wherein R²' is a C2-C12 aliphatic unsaturated monovalent hydrocarbon group, R³ is a C1-C12 unsubstituted or substituted, monovalent hydrocarbon group exclusive of an aliphatic unsaturated bond, and n is an integer of 0 to 100, and a cyclic organohydrogenpolysiloxane having the formula (5): 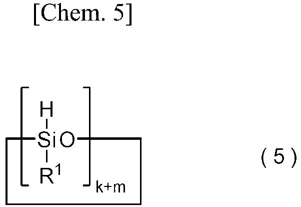 wherein R¹ is a C1-C12 unsubstituted or substituted, monovalent hydrocarbon group exclusive of an aliphatic unsaturated bond, k is an integer of 0 to 2, m is an integer of 3 to 6, and k+m is an integer of 3 to 8, to hydrosilation addition reaction in the presence of a platinum compound-containing catalyst.

5. An additive to be added to a room temperature-curable resin composition of condensation cure type, the additive comprising the organosilicon compound of claim 1 or 2.

6. The additive of claim 5 wherein the room temperature-curable resin composition of condensation cure type is a room temperature-curable organopolysiloxane composition of condensation cure type.
